# EUROPEAN PATENT APPLICATION

(11) **EP 3 163 276 A2**
(43) Date of publication of application: **03.05.2017**
(21) Application number: 16196731.0
(22) Date of filing: 01.11.2016
(51) Int. Cl.: G01L 9/00, G01D 5/28, G02B 6/26

(54) **FABRY-PEROT OPTICAL SENSOR**

(30) Priority: 02.11.2015 EP 15192656
(71) Applicant: Haute Ecole Arc Ingénierie, 2000 Neuchâtel (CH)
(72) Inventor: LLERA, Miguel, 2300 La Chaux-de-Fonds (CH); AELLEN, Thierry, 2000 Neuchâtel (CH)
(74) Representative: Gevers SA

(57) **Abstract**

In the present invention a Fabry-Perot optical sensor is disclosed comprising an optical cavity (20) defined by the exit of the waveguide and a second end (10b) opposite to said exit (10b). The exit (24) of the optical cavity (20) is closed by a deformable plug (60) and a mobile reflector element (40) is arranged in said optical cavity (20). The reflector element (40) has a reflecting surface (42) to the side of said second end (10b) and a second surface (44) opposite to the reflecting surface (42), said reflecting surface (42) is arranged to reflect at least partially said incident light beam (200).

The optical cavity (20) comprises a volume of a gas (50) situated between said entry (22) and said reflecting surface (42). A deformable plug (60) closes the exit (24) of the optical cavity (20). The deformable plug (60) is configured so that the deformation thereof results in a displacement of the reflector element (40) along said cavity axis (21).

## Description

### Technical Field

The present invention is related to miniature waveguide sensors. More particularly, the present invention relates to optical measurement systems based on Fabry-Perot waveguide tip sensors for measuring physical parameters such as pressure, temperature, force, vibration and for applications wherein the available measurement space is small.

### Background of the invention

The use of optical waveguide sensors, in particular fiber sensors in a wide range of environments is becoming of a vital importance for many industries such as cars, aeronautics, military, oil wells, medical applications. Optical waveguide and fiber sensors have been developed for decades for applications requiring the measurement of vibration, acceleration, presence of objects, temperature, pressure or a combination of them. Optical waveguide and optical fiber sensors are particularly useful for the measurement of physical parameters in small volumes that may be located at long distances relative to the light source that provides the guided light in these sensors. These physical parameters may be temperature, pressure, vibration, force and so on. Optical fiber sensors may have distributed sensing structures such as distributed grating structures arranged along the length of the fiber or they may have fiber tips arranged to the fiber that comprise cavities. Optical fiber sensors in particular allow making measurements in strong electromagnetic environments and also in harsh environments and are able to achieve very high sensitivities.

A general overview of the variety of fiber optical sensors may be found in the publication: "Fiber optic sensors", edited by F.Yo and S.Yin, Pennsylvania State University, ed. Marcel Dekker Inc., New York, 2002, ISBN 0-8247-0732-x.

Optical waveguide sensors and particularly optical fiber sensors based on Fabry-Perot cavities have been widely explored over the last two decades. Fabry-Perot fiber sensors may be classified as extrinsic Fabry-Perot configurations or intrinsic Fabry-Perot Configurations.

S.J.Petuchowski et al. describe an extrinsic Fabry-Perot fiber sensor in the article: S.J.Petuchowski et al., "A sensitive fiber-optic Fabry-Perot interferometer", IEEE of Quantum Electronics 17 (1981), PP.2168-2170.

An intrinsic Fabry-Perot optical fiber sensor is described in : C.E.Lee et al, "Interferometric Optical fiber sensors using internal mirrors", Electronics letters 24, (1988), pp.193-194.

In particular, prior art discloses how to provide pressure sensors at the tip of an optical fiber or an optical waveguide. For example, the document WO 02/23148 (Wilner et al.) describes a housing made from silicon in which the end section of a lead fiber end and a silicon diaphragm are fixed. The flat cleaved fiber end and the diaphragm form two reflective surfaces that define a Fabry-Perot interferometer. The optical signal from the lead optical fiber is split into two paths, which mutually interfere. The sum of their interference is function of the distance between the fiber end and the diaphragm position, which is function of the pressure. By adapting the housing and the diaphragm the system could be used to measure also the temperature, vibrations or accelerations.

Recently a fiber optic Fabry-Perot interferometer has been proposed based on a hollow core fiber forming a cavity that comprises a liquid and an air bubble: C.L. Lee et al "Fiber Fabry-Perot interferometer based on Air-Bubbles/Liquid in Hollow core Fibers", IEEE Photonics Technology Letters, vol 26, nr.8, April 15, 2014, pp. 749-752. As the air-bubble in C.L.Lee et al is surrounded by liquid the fiber sensor is highly sensitive to temperature since the thermal expansion coefficient of the air and the liquid are much higher than that of solid silica. The system requires a rigid taper plug to seal off the fiber tip cavity. In order to keep in place that plug an epoxy layer has to be applied to the plug and the surrounding hollow core fiber. This makes the process complicated and expensive as it would not be possible to realize the device in a batch process. Another issue is that the system is not adaptable to measure pressure as the tip is completely rigid. The main shortcoming of the device is that the measurement range is limited by the possibility that the filling of the liquid could break through the fiber taper plug if the internal pressure increases too much upon heating. The measurement range is also limited by the free spectral range (FSR) of the interference fringes. Interference dips may overlap under a large variation of temperature. The sealing by an epoxy layer is another shortcoming as the epoxy-taper plus cannot withstand temperatures higher than 39°C. At that temperature the volumes of air and liquid cease to be constant.

### Summary of the invention

An object of the present invention is to propose a new optical Fabry-Perot waveguide sensor for detecting the physical parameters such as pressure, force and the temperature at an optical cavity, comprising a deformable membrane, which is arranged at an end of the waveguide sensor, and to overcome at least partially the limitations of optical waveguide sensors of prior art.

More precisely the invention is achieved by a Fabry-Perot optical sensor comprising:
- an optical waveguide with a first end adapted to receive a light source, and a second end opposite to the first end;
- an optical cavity, having a cavity axis, defined by said second end and an exit situated opposite to said second end, said optical cavity being arranged to receive an incident light beam provided by the optical waveguide.

Said exit is closed by a deformable plug and a reflector element is arranged in said optical cavity.

Said reflector element has a reflecting surface to the side of said second end and has a second surface opposite to the reflecting surface. The reflecting surface is arranged to reflect at least partially said incident light beam.

The optical cavity comprises a volume of a gas which is situated between said entry and said reflecting surface. Said deformable plug is arranged at said exit and is configured so that the deformation thereof results in a displacement of said reflecting surface along the cavity axis.

In an embodiment said gas is air.

In an embodiment a portion of said reflector element is made of glass.

In an embodiment at least a portion of said reflector element is made of metal.

In an embodiment at least a portion of said reflector element is made of a polymer.

In an embodiment said reflecting surface is a curved surface.

In an embodiment said reflecting surface comprises at least a reflecting layer.

In an embodiment said reflecting surface comprises a diffractive layer.

In an embodiment said reflecting surface comprises a dielectric layer;

In an embodiment said plug comprises a volume of liquid and a deformable membrane, said volume of liquid being in contact with said second surface, said deformable membrane being in contact with said volume of liquid to the side away from said second surface.

In an embodiment said deformable membrane is a membrane made of parylene.

In an embodiment said deformable plug is made of a compressible material having a portion that is located in said optical cavity, said portion being in contact with said second surface.

In an embodiment said compressible material is a polymerized silicone.

In an embodiment said optical waveguide is an optical fiber.

In an embodiment said optical waveguide is arranged on a flat substrate.

### Brief description of the drawings

- Fig. 1 Illustrates a Fabry-Perot optical sensor comprising an optical cavity closed with a deformable plug comprising a volume of liquid and a deformable layer, the sensor comprising a mobile reflector between the plug and and a volume of gas between the reflector and the exit of a waveguide;
- Fig. 2 Illustrates a Fabry-Perot optical sensor comprising an optical cavity closed with a deformable plug, the optical cavity comprising a mobile reflector between the deformable plug and a volume of gas between the reflector and the exit of a waveguide ;

- Fig. 3 Illustrates another Fabry-Perot optical sensor comprising an optical cavity closed with a deformable plug;
- Fig. 4 illustrates a Fabry-Perot optical sensor based on a substrate that comprises an optical waveguide on its surface;
- Fig. 5 shows a cross section of an optical cavity arranged on a substrate comprising an optical waveguide inside the substrate;
- Fig. 6 shows a Fabry-Perot optical sensor comprising a plurality of Fabry-Perot optical sensors;
- Fig. 7 shows a Fabry-Perot optical sensor comprising a plurality of optical cavities, each comprising a deformable membrane, arranged on a flat waveguide substrate ;
- Figs. 8 to 18 illustrate different steps of the method according to the invention;
- Fig.19 shows a Fabry-Perot sensor of the invention comprising a capillary tube arranged to limit the movement of a reflector in the optical cavity of the sensor;

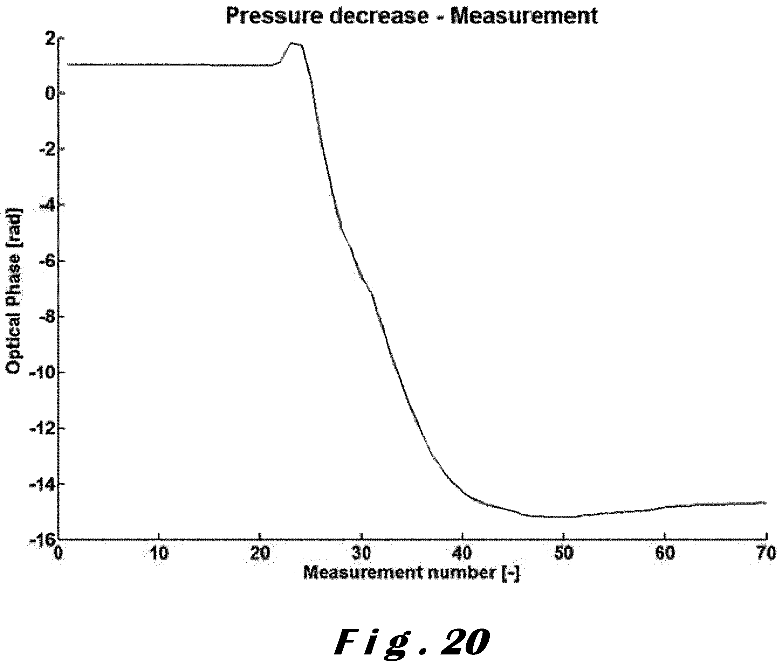

- Fig. 20 and Fig. 21 show the pressure response signal of an exemplary Fabry-Perot sensor of the invention, respectively a reference signal, upon a changing pressure outside the optical cavity;
- Fig. 22 and Fig. 23 show the temperature response signal of an exemplary Fabry-Perot sensor of the invention, respectively a reference signal, upon a pressure cycle applied on the deformable membrane of an optical cavity;

### Detailed description

The invention intends to improve the limitations of Fabry-Perot waveguide sensors of prior art. More particularly the invention concerns an optical Fabry-Perot sensor comprising an optical waveguide 10 and an optical cavity 20 closed by a deformable plug 60. A mobile optical reflector 40 is arranged in the optical cavity 20 and is displaced in the optical cavity 20 when the deformable plug is deformed. By the displacement of the optical reflector 40, a portion of the incoupled light beam 200 in the optical cavity 20 is coupled back in the core 10c of the optical waveguide 10. The variation of the backcoupled light in the waveguide 10, by the change of the position of the reflector 40 and so the dimension of the air volume 50 is related to the variation of the physical parameter that deforms the deformable layer may be determined. The principle of a Fabry-Perot filter is well known to the person skilled in tha art and will not be described further here.

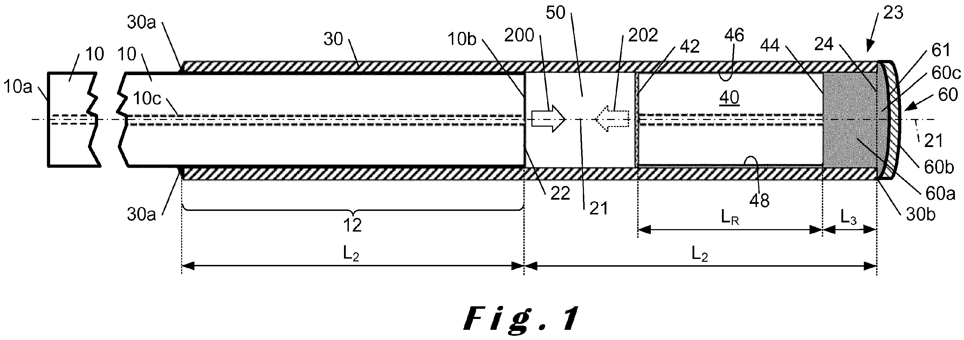

Fig.1 shows a preferred embodiment of a Fabry-Perot optical waveguide sensor 1 according to the invention, in which the optical waveguide 10 is an optical fiber, which may be a monomode fiber or a multimode fiber or a multicore fiber, or a fiber bundle.

The optical fiber 10 comprises an incoupling end, defined as a first end 10a, to which a light source may be adapted so that a light beam may be coupled in the core 10c of the fiber and guided to an outcoupling surface, defined as second end 10b, opposite to the first end 10a. In operation of the sensor, an optical beam is coupled into an optical cavity 20 by said second end 10b, providing a propagating optical beam 200 in the cavity 20. To said second end 10b an optical cavity 20 is arranged as illustrated in Fig.1. This optical cavity 20, having a length L1, is defined by an entry surface, defined as the entry 22, which is the surface defined by said second end 10b, and by an exit 24, which is a surface opposite to said entry 22. The optical cavity 20 defines a cavity axis 21, which is the axis along which the reflector element 40 is moved as described further.

The optical cavity 20 is preferably formed by a portion of a glass capillary 30, or glass tube that is adapted to a length L2 of an extremity 12 of the optical fiber 10. The capillary 30 has a first border 30a to the side of the fist end 10b of the waveguide and a second border 30b, opposite to said first extremity 30a. Said second border 30b of the capillary tube defines said exit surface 24 of the optical cavity 20. In the case of a cylindrically shaped capillary tube 30 said borders 30a, 30b are circular borders and the inner diameter of the capillary tube 30 has a diameter slightly greater, preferably some micrometer more, than the outer diameter of the fiber so that the capillary tube can be easily slided over the fiber extremity 12 during the manufacturing as further described. For example the optical fiber may have a diameter of 200µm and the inner diameter of the capillary tube may have a diameter of 205µm.

It is understood that a coating layer maybe deposited to the second fiber end 10b. This coating layer may be a reflecting coating deposited to said second end 10b. Said coating layer may be adapted to improve the quality and contrast of the interferometric signal, i.e. the interferogram, of the Fabry-Perot optical sensor. Also, at least one additional optical element such as a microlens or thin glass window may be adapted anywhere in the optical cavity 20, preferably adjacent to said second end 10b.

In the optical cavity 20 comprises a reflector element 40, defined also as reflector, having a reflecting surface 42 to the side of said entry 22 and having a second surface 44 opposite to the reflecting surface 42. The reflecting surface 42 reflects at least a portion of the incident light beam 200 provided by the optical fiber 10. The reflector 40 may be arranged to change the divergence of the incident light beam 200 so that the back reflected light beam 202 has another divergence than the incident light beam 200. In an embodiment the reflector 40 may also be arranged so that the reflected incident light beam 200 is split in at least two back reflected beams 202, providing a first reflected beam that is incoupled in the optical fiber 10 that provides the incident light beam and a second reflected light beam that is incoupled in a second fiber parrallel to said optical fiber 10. Using at least one second optical fiber allows to provide improvements of the sensor performance such as intensity referencing.

In variants the optical cavity 20 may comprise openings or windows that may be used to determine, by optical means, the position of the reflector element 40.

The optical reflector 40 is preferably made of a portion of a fused-silica optical fiber of which the plastic cladding has been removed but may also be another type of glass rod. The optical reflector 40 may be made of any other material, for example a ceramic, sapphire, a metal or a plastic. The optical reflector 40 may be made of the combination of several materials, for example a polymer layer adapted to a glass or metal part. For example the reflector 40 may be a glass rod, such as a portion of a fused-silica fiber, having a reflecting metal layer deposited on said reflecting surface 42, to the side of the second fiber end 10b, and a polymer layer to the side away from the reflecting surface 42. Said polymer layer or other type of additional layer may serve to improve the wettability of the second surface 44 to a liquid 50 as further described.

It is understood that the side wall of the reflector 46, 48, may comprise a layer improving the sliding characteristics of the reflector 40 in the optical cavity 20. In the case that the reflector is has a cylindrical shape it has only one side wall 46. The shape of the reflector 40 is preferably a rod, but may have any cross sectional shape such as an elliptical shape or rectangular shape. The shape of said reflecting surface 42 and said second surface 44 may be different. For example, the reflecting surface 42 may be a convex or a concave shaped surface and the second surface 44 may be a flat surface. The reflecting surface 42 and the second surface 44 may be both curved surfaces.

The reflecting surface may be a coated surface. For example, the reflector 40 may be a silica rod comprising a metallic reflecting layer comprising a dielectric coating to the side of said entry 22.

In all the embodiments of the invention a volume of gas 50 is located between said second end 10b and said reflecting surface 42. The space, and so the volume of gas 50, between the second end 10b and the reflecting surface 42 forms the Fabry-Perot resonant cavity. This configuration allows to have only two interfaces in the optical beam. I.e. said second end 10b and said reflecting surface 42. Preferably the gas is air.

Said volume of gas 50, situated between said entry 22 and the reflecting surface 42 constitutes an optical resonating cavity 50 and forms the Fabry-perot cavity of the sensor.

In the preferred embodiment of Fig.1 the optical cavity 20 is closed at its exit surface 24 by a deformable plug 60. In this embodiment the deformable plug 60 comprises a volume of liquid 60a and a deformable layer 60b. The volume of liquid 60a is in contact with said second surface 44 and is situated between said second surface 44 and the deformable layer 60b. The liquid 60a is preferably oil but may be another liquid such as water. In the preferred embodiment the deformable layer 60b is a parylene layer that is deposited to the surface of the liquid 60a which is located at the exit 24 of the optical cavity, this liquid providing a convex surface 61 protruding outside the exit 24 of the optical cavity 20. The method to deposit such a parylene layer 60b is further described in the section related to the method of fabrication of such an optical sensor. As such, the deformable membrane 60b is in fluidic connection to the reflector 40 so that any deformation of the deformable membrane 60b translates into a movement of the reflector 40 along the axis 21 of the optical cavity 20.

By the change of a physical parameter outside the optical cavity 20 of the Fabry-Perot sensor, such as for example a change of air pressure or a change of temperature or by applying a force or a vibration, the deformable membrane 60b will undergo a deformation. The deformation of the deformable membrane 60b, by the effect of the variation of an outside physical parameter to the optical cavity 20, will be transferred to said volume of liquid 60a and further transferred to said air volume 50 by the reflector 40 so that the gas volume 50 which will undergo a compression or an expansion, depending if the deformable membrane 60b has expanded or contracted.

As such, the reflector 40 acts as a piston so that the applied force to its back surface 44 compresses the resonating cavity, i.e. said gas volume 50. For example, when a pressure is applied to the membrane 60b from the outside and in the direction of said fiber end 10b, the reflector will move along said cavity axis 21 in the direction of that fiber end 10b and the volume of gas 50 will be compressed. By releasing the pressure from the membrane 60b the gas pressure of the gas volume 50 will impose a force on the reflector 40 and the deformable membrane 60b will achieve its initial form. The main drawback of using a silicone layer as deformable plug is that it presents a hysteresis effect.

In a variant the liquid 60a may be replaced by another deformable material which presents no hysteresis during the deformation cycle.

In the case that the sensor of the invention is used as a pressure sensor, the sensor is able to measure typical pressure changes ranging from 1 Pascal and up to several bars. In the case that the sensor of the invention is used as a temperature sensor, the sensor is preferably used above the freezing point of the used liquid 60a and lower than the resistance temperature for the coating material and/or the vaporization temperature of liquid. In the case the sensor of the invention is used as a force sensor, the possible applied maximum force depends on the mechanical resistance of the fiber sensor tip, but extreme low forces such as a few hundred mN, even of the order of µN, are typically measurable. When the optical sensor is not encapsulated, and forces are applied directly onto the deformable membrane, forces as low as pN or nN may be detected. Acoustic measurements are possible with the optical sensor of the invention and its design and its sensitivity is substantially similar to the one of a pressure optical sensor.

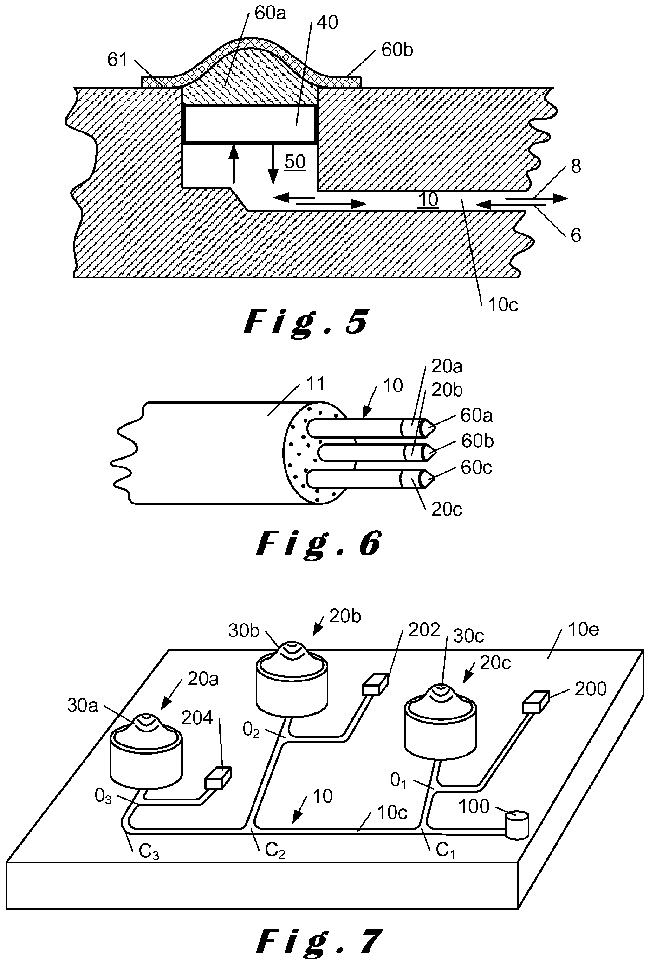

In a variant the Fabry-Perot sensor comprises a plurality of Fabry-Perot sensors as illustrated in Fig.7 Each of the Fabry-Perot optical sensors 1 may have different types of fiber 10, and/or different types of optical cavities 20a-c and/or different types of deformable layers 60a-c.

In a variant, a bundle of fibers comprising different fibers may face a single reflector 40. In another variant the sensor may comprise at least two fibers and the reflector may be arranged so that light provided by one fiber is deviated and backcoupled into at least a second fiber.

The optical cavity may also be arranged to that the position of the reflector 40 can be determined by an optical system that can image the side of the optical reflector 40, through the wall of the tube 30. In a variant at least a portion of the side wall 46, 48 of the reflector may comprise a reflector layer or at least an optical element such as a microlens or a microlens array. Also, the side wall 46, 48 of the reflector may have a side wall that has at least a rough surface portion or a portion having an inclined surface relative to the optical axis 21.

In a variant, the reflector may comprise at least two reflector elements that may be separated by spacers, and/or a liquid layer and/or or an additional deformable layer.

In a variant the resonating cavity, formed by the volume of air, may comprise two resonant cavities. This may be realized by a reflector element 40 comprising two parts having a different length.

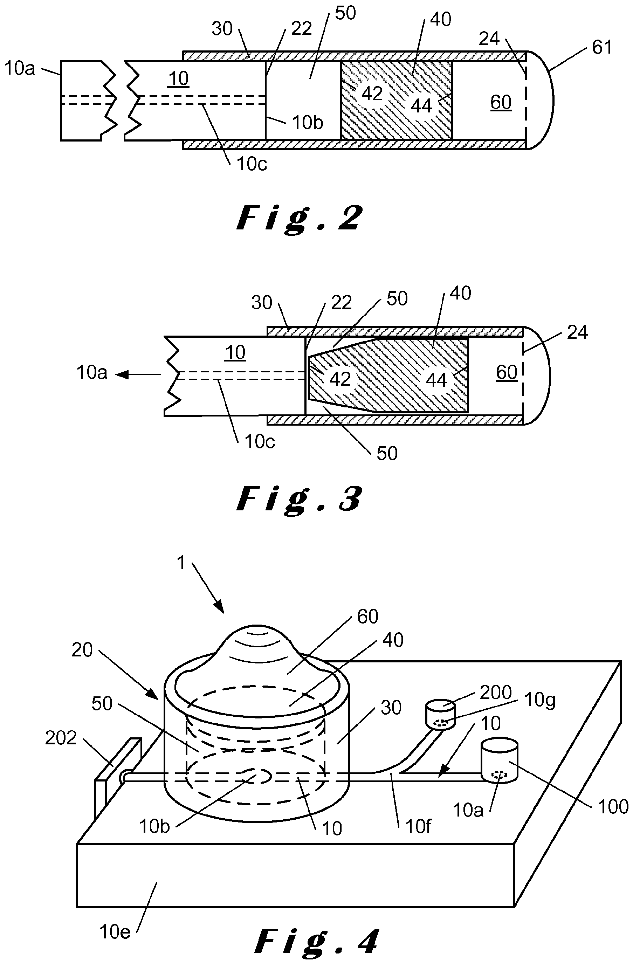

In an embodiment the deformable plug 60 is a polymerized layer 60 of which a portion is located inside said optical cavity 20, as illustrated in Fig.2. Said polymerized plus 60 has a curved surface 61 which isin direct contact with the environment outside the optical cavity, which can be for example a gas or a liquid. Similar to the preferred embodiment of Fig.1 comprising a parylene membrane in contact with a liquid, the deformation of the polymerized layer 60 will impose to said reflector 40 a change in its axial position, along said optical cavity axis 21. For example, when the optical cavity tip 23, which is filled with a polymerized layer, is heated, the expansion of the polymerized layer will move the reflecting surface 42 to the side of the fiber end 10b.

In an embodiment the polymerized layer 60 is a layer of polymerized silicone.

As well as in the case of the embodiment comprising a deformable layer in contact with a liquid or a silicone layer, the diameter and quantity of liquid or silicone in the optical cavity is determined in function of the type of physical parameter to be measured as well as the desired sensitivity of the sensor.

The reflector element 40 may have different shapes. In an embodiment shown in Fig.3 the reflector element has a tapered form. In a variant the optical cavity 20 and reflector element 40 may be configured so that the reflector surface 42 is in contact with said exit 22 in one position of the reflector element 40, which allows providing a reference intensity for a precisely determined position of the reflector 40.

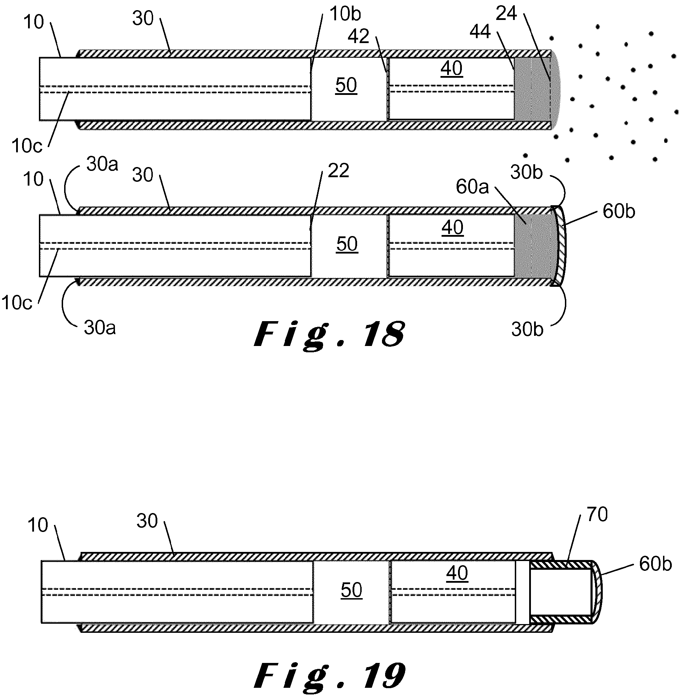

In an embodiment the optical cavity 20 may be configured so as to limit the movement of the optical reflector 40. This may be realized by arranging a blocking element 70 in the optical cavity 20. In an exemplary embodiment illustrated in Fig.19 a portion of a capillary tube 70 is inserted in the optical cavity. The position of that capillary tube 70 may be adapted in function of the desired extreme position of the reflector 40 in the optical cavity 20. In the case that a blocking element is inserted in the optical cavity said deformable plug may be formed on said blocking element as illustrated in the embodiment of Fig. 19.

In a variant, a Fabry-Perot optical sensor 1 may be based on a flat substrate 10e, such as a silicon substrate, as illustrated in Fig.4. In the case of a flat waveguide a capillary 30 defining the optical cavity 20 is arranged perpendicular on the surface of said substrate that comprises the waveguide 10. On said flat substrate means may be provided to couple light out of the optical waveguide, such as a waveguide coupler 10f, which allows directing light to a detector 200 adapted to a waveguide exit 10g. The advantage of a flat waveguide sensor is that light sources such as a diode laser 100 may be arranged to incoupling surfaces 10a, as illustrated in Fig.4.

Fig.5 shows a cross section of an embodiment comprising a thick flat waveguide substrate comprising a cavity 50 that comprises the reflector element 40.

The skilled person may devise several variants of waveguides 10c for different incoupling 6 and outcoupling beam configurations 8.

In an embodiment illustrated in Fig.7 the sensor may comprise different types of waveguides on its surface, each waveguide being connected to different optical cavities20a, 20b, 20c, each cavity being closed by a plug 60a, 60b, 60c.

The waveguides may comprise at least one light emitter 100, as illustrated in Fig. 6 and different types of incouplers C1, C2, C3 and different types of outcouplers O1, 02, 03. Each optical cavity 20 may be associated to a detector 200, 202, 204 as illustrated in Fig.7. On a flat substrate 10e, different waveguide paths may be provided, some of them may be connected to a referencing or calibrating sensor 202 as illustrated in Fig.7. As well as in the case of fiber waveguides or flat substrates comprising waveguides, optical couplers may be provided to separate the incoming light beam 200 and the retro reflected light beams 202 such as illustrated in Fig.7 that shows a waveguide coupler 10f.

In an embodiment the Fabry-Perot sensor may comprise fiber bundle 11 and a plurality of Fabry-Perot sensor tips as illustrated in Fig. 6. Each sensor tip may comprise a different optical cavity 20a-20c and a different plug 60a-c.

It is generally understood that the optical cavity 20 and at least a portion of the optical waveguide 10 may be protected by a protection material such as an encapsulant. Encapsulating techniques of fiber optical techniques and optical waveguides are well known from the skilled person and are not described here.

It is generally understood that any layer or structure that may improve the reliability and/or performance of the optical sensor of the invention may be situated in the Fabry-Perot optical sensor of the invention. For example in a variant said second surface 10b may be a curved surface. In another variant spacers may be provided between said second end 10b and said entry 22.

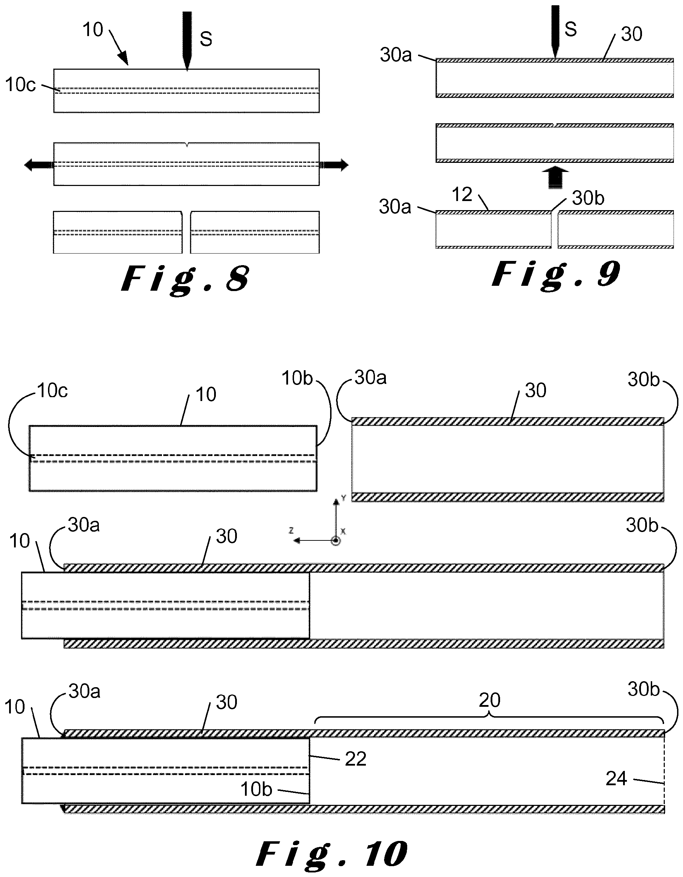

The invention is also achieved by a manufacturing method of the optical Fabry-Perot sensor described above and as illustrated in the embodiment of Fig.1. The manufacturing of the fiber optical Fabry-Perot sensor is described in reference to Figs. 8 to 18, which illustrate the required steps of the manufacturing method.

The first step of the manufacturing method, shown in Fig. 8 is to provide an optical fiber 10 on which a protective coating is stripped over a certain length, which is cleaned and precisely cleaved. Cleaving can be carried out by scribing with a scribing tool S and tensing, so as to provide a very flat surface perpendicular to the core of the optical fiber. The optical fiber may be a monomode fiber or a multimode fiber, or a multicore fiber comprising a central core, and may have an outside diameter in the range of 50 µm to 500µm, preferably in the range of 20 µm to 500µm. It is understood that other fiber sizes are possible as well and the length of the optical fiber 10 depends on the application. Different types of optical fiber 10 may be used, such as for example glass optical fibers, plastic optical, sapphire, chalcogenide fibers.

Other cleaving techniques of the optical fiber 10 can be used to obtain a very flat surface 10a, such as laser techniques.

In a second step shown in Fig. 9 a protective capillary tube 30 is cleaved following a similar procedure as usual for standard optical fibres except that a capillary cannot be tensed. The protective capillary tube 30 is cleaved so as to provide a predetermined length as illustrated in Fig. 9. Preferably a glass or ceramic protective capillary tube 30 is used but other materials may be used as well, such as metal or plastic. Instead of a longitudinal tensile force, a lateral force is applied in order to cleave the protective capillary tube or cutting of the capillary 30. Other cleaving techniques can be used such as laser cutting techniques.

In a third step, the protective capillary tube 30 and the cleaved end of the optical fiber 10, also defined as the second end 10b are aligned, as illustrated in Fig.10. The second end 10b is the end of the optical fiber 10 that provides, in use of the optical sensor, a light beam 100 to the optical cavity 20. The stripped and cleaved fiber section can be partially introduced in the protective capillary 30 as shown in Fig.9. The insertion length L2 is typically at least 10 mm, but other lengths may be used as well, depending on the application and the dimensions of the optical fiber 10 and the optical cavity 20. The alignment between said second end 10b and the protective capillary 12 may be done with any X, Y and Z alignment system but will be preferably done with an optical fiber splicing system equipped with such alignment ability.

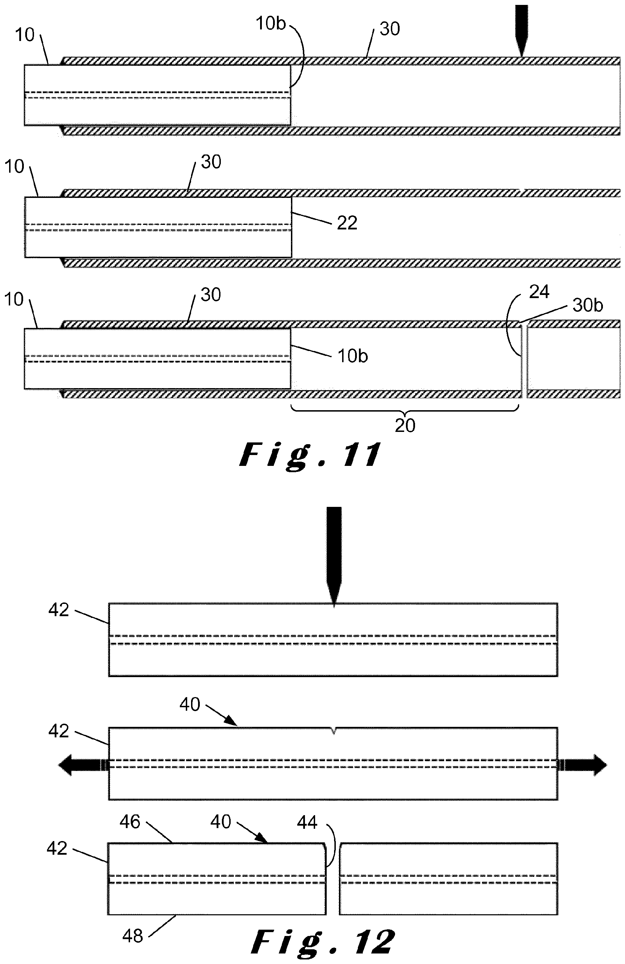

In a fourth step, the protective capillary 30 is cleaved at a cleave location as illustrated in Fig. 11. Depending of the final length to be protected by the protective capillary 30, the fiber will be manually pushed further into the protective capillary 30 until a predetermined length L2 of the optical fiber 10 positionned inside said protective capillary 12 is obtained, as illustrated in Fig.1.

In a fifth step, illustrated in Fig. 12, a rod 45 that comprises the body of an optical reflector 40 is provided. This rod 45 which may be made of glass or ceramic. In a variant the rod 45 may comprise a first portion being a portion of an optical fiber and a second portion that may be a capillary or hollow core fiber or a capillary fiber. By using a reflector 40 that has a solid cylinder to the side of the entry 22 and a hollow part to the side of the plug 60 it is possible to improve the adherence of said second surface 44 and the plug 60.. In a preferred embodiment as explained before, the rod 45 is a portion of an optical fiber of which the cleaving is similar as the above explained cleaving of the fiber tip. The cleaving position depends on the length of the reflector that is desired, typically a length of 200 µm. The optical cavity may also be made of another material such as plastic or metal or a semiconductor, or may comprise a combination of these materials. The optical cavity has an entry 22 and an exit 24 as illustrated in Figs. 1 and Fig. 2. The choice of the type of the optical cavity 20 depends on the configuration chosen.

The capillary tube 30 may be spliced to the surface of the optical fiber 10 but other adhesion techniques could be used, such as laser welding or gluing.

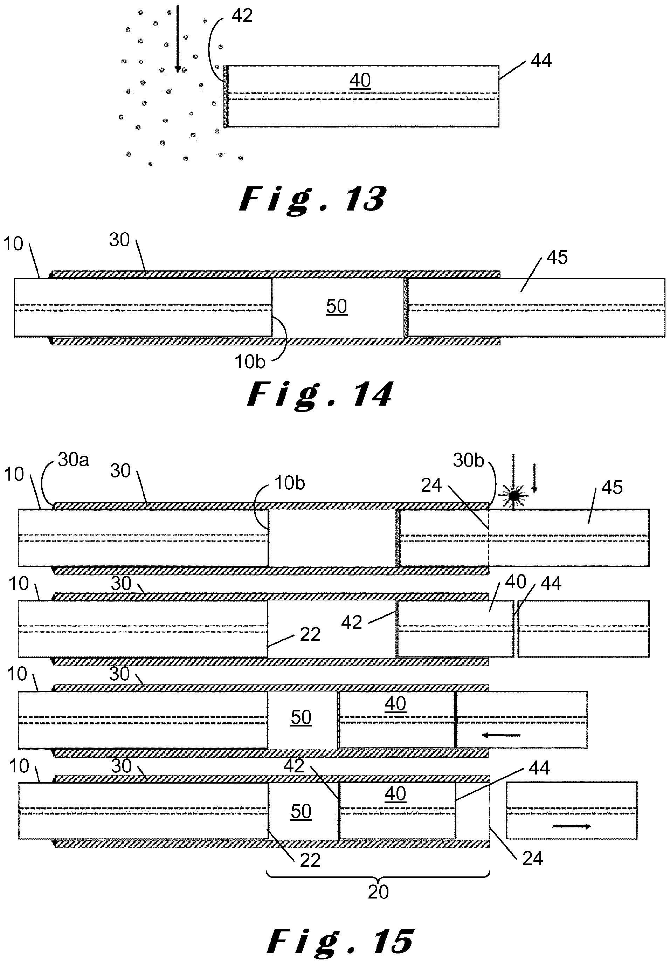

In a sixth step, illustrated in Fig.13, the rod 45 is coated to one side 42 with a reflecting layer such as a metal layer, such as to provide a reflecting surface 42 . The coating may also be a dielectric coating. Also, the reflecting surface 42 may comprise a diffractive structure.

In a seventh step, the rod 45 is introduced and positioned into the capillary tube 30, as illustrated in Fig.14.

After the positioning of the rod 45 to a predetermine position inside the capillary tube, the rod 45 is cut at a predetermined location relative to the second end 30b of the capillary tube 30 as illustrated in Fig. 15. Preferably the rod 45 is cut by a laser technique at a distance of 10 to 20 um relative to the second end 30b of the capillary. Such a short distance is preferable to avoid a too long travel length of the final reflector 60 into the capillary tube, as this might lead to possible damage of the inside walls of the capillary tube. In a next step shown in Fig.14 the reflector is pushed to a short distance, typically 10-20um, inside the capillary tube 30.

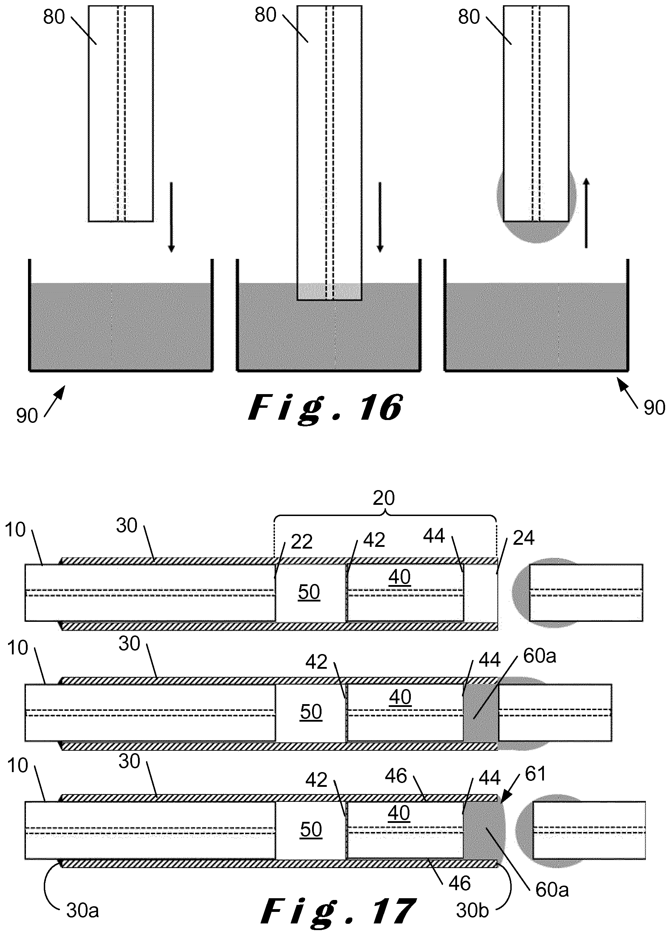

In an eight step, illustrated in Fig. 16, a separate rod 80 is tipped into a liquid reservoir 90 to be deposited to the exit 24 of the optical cavity 20. The liquid 60a may be oil, or may be water or any other liquid. Oil is a preferred liquid. Said liquid 60a may comprise components or other liquids to improve the properties of the deformable plug 60. The separate rod 80, is preferably a fiber or fiber tip, or a capillary that is imbibed at an extremity with liquid 60 by transferring the tip into a liquid reservoir 90 as illustrated in Fig.16. Then, as illustrated in Fig.17, the imbibed extremity of the separate rod 80 is manually or automatically aligned with the exit 24 of the optical cavity 20 and is subsequently put in contact to it, so that liquid 60a wets the exit 24 of the optical cavity 20 by capillarity. The liquid 60a may comprise additives to improve the adherence to the exit 24. The volume of liquid that is diffused into the optical cavity 20 depends on the used materials of the optical cavity 20, on the diameter and shape of the hollow core 20 of the optical cavity 20 and the property of the liquid. Once the liquid 60a has penetrated partially into the optical cavity 20 the rod 80 is withdrawn, a portion 60c of the liquid protrudes said exit 24 and a convex liquid surface 61 is formed, facing said exit 24, as illustrated in Fig.16 and Fig.1.

In a ninth step, illustrated in Fig.18, a deformable membrane 60b is formed on the convex liquid surface 42. Techniques called solid-on-liquid deposition are used to realize the deformable membrane. Such techniques are described in A.Homsy, "Solid on liquid deposition, a review of technological solutions", Microelectronic Engineering, 2015, nr. 141, pp.267-279 and is incorporated in its entirety here. Preferably, the solid molecular precursors 90 are in gaseous phase. Once the liquid 70 has been placed at the exit 24, the vapour deposition of the deformable membrane 60b can be performed. The timing of the deposition of the deformable membrane 60b is an important parameter of the process. In order to assure that the curved surface 61 of said liquid 60a stays convex, the deposition of said deformable membrane is performed preferably before one hour after the deposition of said liquid 60a, more preferably less than 5 min after the deposition of said liquid 60a.

Deposition technique such as for example physical vapour deposition such as thermal evaporation and sputtering, or chemical vapour deposition technique assisted by plasma or not and atomic layer deposition are preferred. In some embodiment, low vapour pressure liquid are preferred when low pressure deposition processes are required.

In an embodiment of the method parylene is deposited. The process to deposit a parylene layer is described in the document EP 1672394 which is incorporated in its entirety herein. Depending on the deformable membrane thickness foreseen, an appropriate quantity of parylene is to be prepared. Deformable membranes may have a thickness between 50nm and 250nm and may have a thickness greater than 250nm.

In a variant of the method, the steps of introducing the liquid into the optical cavity and covering the curved surface of that liquid with a deformable membrane are replaced by a step of introducing silicone material in the optical cavity, followed by the polymerisation of that silicone.. This silicone layer is liquid when applied to the exit 24 and penetrates into the optical cavity before it polymerises and becomes solid.

In this case the silicone layer acts as the deformable layer, as illustrated in Fig.2, and there is no need to deposit and additional layer of parylene or another deformable layer.

In an embodiment of the method of fabrication as described above a waveguide 10 situated on or into a substrate 10e may be used, as illustrated in Fig. 3 and Fig. 4. In the case of a flat substrate 10e comprising a waveguide 10 the method steps of realizing the optical cavity and the deformable layer are similar. The method differs from the method described above in the case of an optical fiber Fabry-Perot sensor, in that the capillary tube 30 is oriented perpendicular to the fat substrate and fixed to that substrate by gluing or welding techniques

### Experimental results.

Experimental results of an exemplary realization in a fiber sensor according to the invention are described below.

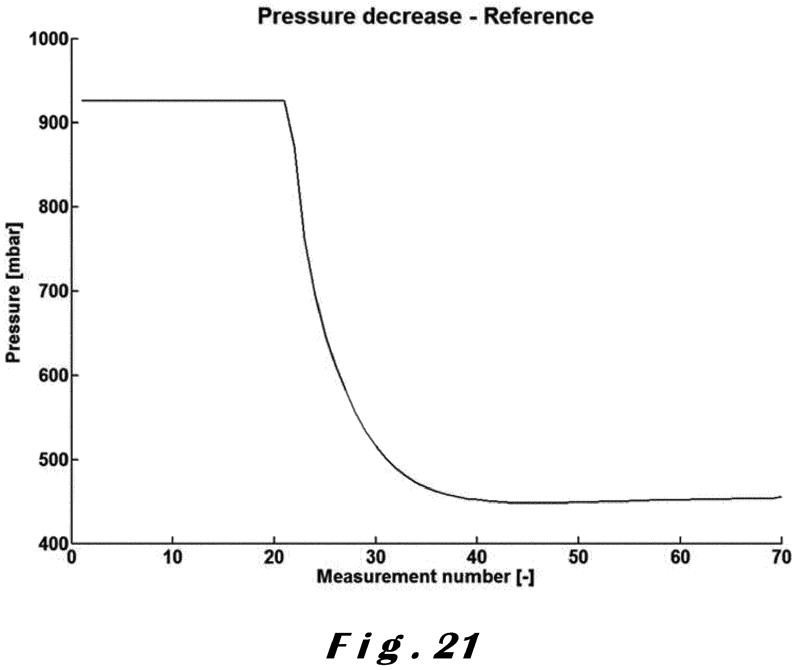

In a first example the Fabry-Perot optical sensor, illustrated in Fig.19, is arranged as a pressure sensor and comprises a standard G.652 single-mode fiber as the lead fiber. The cavity length in that sensor is about 500 µm. The liquid 60a used is a silicone oil (Dow Corning DC 200/12'500). A parylene membrane has been deposited as said deformable membrane and has a thickness of typically 120 nm. In the realized sensor corresponding to the sensor illustrated in Fig.19 a capillary tube has been inserted to the extremity of the optical cavity in order to limit the displacement range of the optical reflector 40 . In a variant the thickness may be between 50 nm and 250 nm, preferably between 80nm and 180nm. Fig. 19 shows a typical curve of the change of the phase of the optical signal obtained by a Fabry-Perot optical fiber sensor 1 as described in the embodiment of Fig. 19, in function of the change of the outside pressure of the fiber tip. Fig. 21 shows a reference signal obtained by a calibrated pressure sensor.

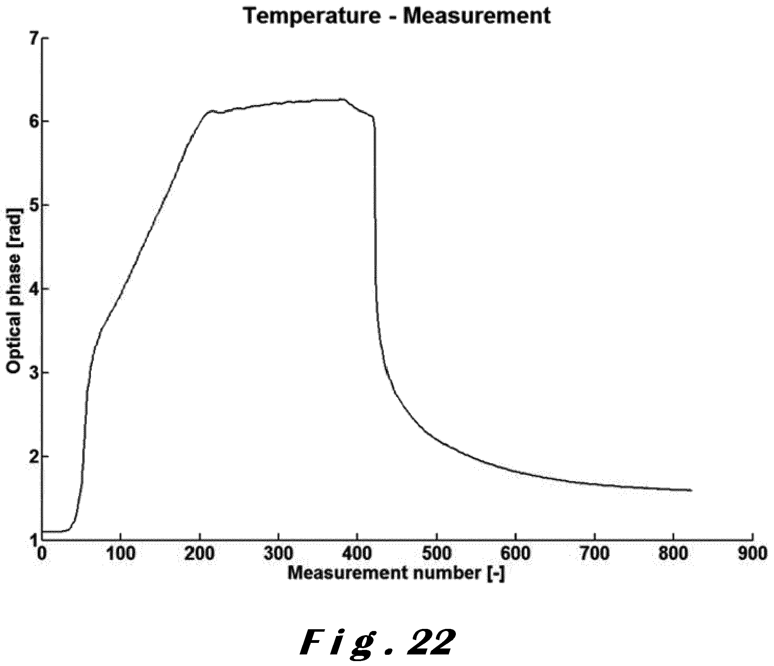

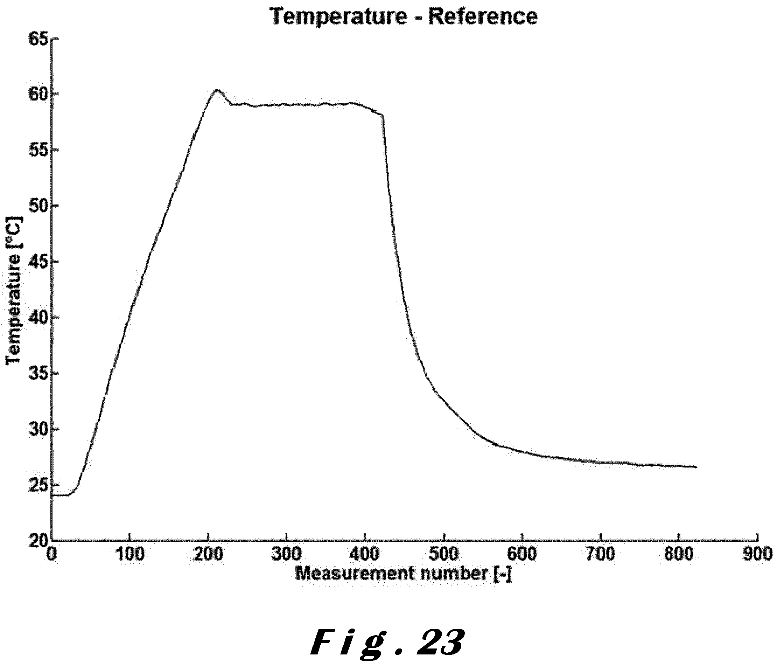

Fig. 22 and Fig. 23 show the response of an exemplary Fabry-Perot optical sensor of the invention, as illustrated in Fig.19, respectively a reference sensor, in function of the raise and decrease of temperature outside the optical cavity. The used sensor comprises a standard G.652 single-mode fiber as the lead fiber. The cavity length in that sensor is about 250 µm.

## Claims

1. A Fabry-Perot optical sensor (1) comprising:
- an optical waveguide (10) with a first end (10a) adapted to receive a light source, and a second end (10b) opposite to the first end (10a);
- an optical cavity (20), having a cavity axis (21), defined by said second end (10b) and an exit (24) situated opposite to said second end (10b), said optical cavity (20) being arranged to receive an incident light beam (200) provided by the optical waveguide (10),
**characterized in that**:
- said exit (24) is closed by a deformable plug (60);
- a reflector element (40) is arranged in said optical cavity (20);
- said reflector element (40) having a reflecting surface (42) to the side of said second end (10b) and a second surface (44) opposite to the reflecting surface (42), said reflecting surface (42) being arranged to reflect at least partially said incident light beam (200);
- said optical cavity (20) comprises a volume of a gas (50) situated between said entry (22) and said reflecting surface (42);
- said deformable plug (60) is arranged at said exit (24) and configured so that the deformation thereof results in a displacement of said reflecting surface (42) along said cavity axis (21).

2. The Fabry-Perot optical sensor (1) according to claim 1, **characterized in that** said gas (50) is air.

3. The Fabry-Perot optical sensor (1) according to any one of claims 1 or 2, **characterized in that** at least a portion of said reflector element (40) is made of glass.

4. The Fabry-Perot optical sensor (1) according to any one of claims 1 to 3, **characterized in that** at least a portion of said reflector element (40) is made of metal.

5. The Fabry-Perot optical sensor (1) according to any one of claims 1 to 4, **characterized in that** at least a portion of said reflector element (40) is made of a polymer.

6. The Fabry-Perot optical sensor (1) according to any one of claims 1 to 5, **characterized in that** said reflecting surface (42) is a curved surface.

7. The Fabry-Perot optical sensor (1) according to any one of claims 1 to 6, **characterized in that** said reflecting surface (42) comprises at least a reflecting layer.

8. The Fabry-Perot optical sensor (1) according to any one of claims 1 to 7, **characterized in that** said reflecting surface (42) comprises a diffractive layer.

9. The Fabry-Perot optical sensor (1) according to any one of claims 1 to 8, **characterized in that** said reflecting surface (42) comprises a dielectric layer.

10. The Fabry-Perot optical sensor (1) according to any one of claims 1 to 9, **characterized in that** said plug (60) comprises a volume of liquid (60a) and a deformable membrane (60b), said volume of liquid (60a) being in contact with said second surface (44), said deformable membrane (60b) being in contact with said volume of liquid (60a) to the side away from said second surface (44).

11. The Fabry-Perot optical sensor (1) according to claim 10, **characterized in that** said deformable membrane (60b) is a membrane made of parylene.

12. The Fabry-Perot optical sensor (1) according to any one of claims 1 to 9, **characterized in that** said deformable plug (60) is made of a compressible material having a portion (63) that is located in said optical cavity (20), said portion being in contact with said second surface (44).

13. The Fabry-Perot optical sensor (1) according to claim 12, **characterized in that** said compressible material is a polymerized silicone.

14. The Fabry-Perot optical sensor (1) according to any one of claims 1-13, **characterized in that** said optical waveguide (10) is an optical fiber.

15. The Fabry-Perot optical sensor (1) according to any one of claims 1-14, **characterized in that** said optical waveguide (10) is arranged on a flat substrate.
